# EUROPEAN PATENT APPLICATION

(11) **EP 3 950 150 A1**
(43) Date of publication of application: **09.02.2022**
(21) Application number: 20781854.3
(22) Date of filing: 12.03.2020
(51) Int. Cl.: B05D 5/06, B05D 5/10, B05D 7/24, B32B 27/32, B65D 65/42, C09J 11/04, C09D 201/00, C09J 201/00, C09D 7/61, C09J 7/35, B32B 3/30

(54) **LIQUID-REPELLENT HEAT SEALABLE FILM AND COATING AGENT**

(30) Priority: 29.03.2019 JP 2019065913
(71) Applicant: Daiwa Can Company, Tokyo 100-7009 (JP)
(72) Inventor: KANAMORI Shinichirou, Sagamihara-shi, Kanagawa 252-5183 (JP); SHIRATORI Seimei, Kawasaki-shi, Kanagawa 212-0032 (JP)
(74) Representative: Henkel & Partner mbB
(86) International application number: PCT/JP2020/010860
(87) International publication number: WO 2020/203146

(57) **Abstract**

The present invention is a liquid-repellent heat sealable film which exhibits excellent liquid repellency and excellent heat sealability, while having durability, and which is provided with a resin layer that is formed on at least one surface of a base material by means of coating, and a large number of oxide fine particles that are adhering to the surface of the resin layer. The resin layer has a recessed and projected structure that is formed by a plurality of particulate resins having heat scalability, said particulate resins being joined with each other and also joined with the base material, while maintaining the shape of particles; and the oxide fine particles are adhering to the surfaces of the particulate resins and are exposed to the outside without being buried in the resins.

## Description

### Related Applications

This application claims the priority of Japanese Patent Application No. 2019-065913 filed on March 29, 2019, the disclosure of which is incorporated herein by reference in its entirety.

### Technical Field

The present invention relates to a film having all of liquid repellency, heat-sealing property, and durability, and a coating agent employed in the same. Specifically, the present invention relates to a material for containers and packaging used for packaging food products, pharmaceuticals, household essentials, cosmetics, and industrial goods.

### Background Art

Various functions are demanded for materials for containers and packaging used for packaging daily necessities, such as food products, pharmaceuticals, cosmetics, and household essentials, and industrial goods. An example of such functions is a property such that contents such as highly viscous liquids, semi-solids, and gel substances hardly adhere to, and hardly remain on the part in contact. When materials for containers and packaging that are poor in adhesion preventability are used for food products that contain creams of cakes, yoghurts, puddings, jellies, syrups, and sources for Japanese dumplings, for example, as their contents, they will be disposed with the contents adhering to/remaining on the materials for containers and packaging; and problems of food waste, or problems of inhibiting promotion of recycling plastics may arise. Moreover, when taking out the contents, there are also problems of dirtying hands, clothes, or other things nearby with the contents adhered to materials for containers and packaging. Furthermore, when materials for containers and packaging are left with the remaining contents, various adverse effects such as occurrence of decay or odor, or gathering of insects may occur. The technique of reducing the amount of the contents adhering to materials for containers and packaging as much as possible is very important.

Cassie-Baxter model is known as a model that shows a relationship between a minute projecting and recessed structure of the surface and liquid repellency. It is reported in Non-Patent Literature 1 ("Ultra-water-repellent surface: fabrication of complicated structure of SiO2 nanoparticles by electrostatic self-assembled films", Applied Surface Science, September 11, 2004, vol. 237, p. 543-547.) that ultra-water-repellent surface was obtained by the projecting and recessed structure formed by silica microparticles. The projecting and recessed structure is called as a lotus-leaf structure, and is widely used for lids of yoghurts as a representative of biomimetics (see Patent Literature 1: Japanese Unexamined Patent Publication No. 2009-241943A, and Patent Literature 2: Japanese Patent No. 4348401B).

It is reported in Non-Patent Literature 2 ("Super-hydrophobic surfaces of layer-by-layer structured film-coated electrospun nanofibrous membranes", Nanotechnology, March 23, 2007, vol. 18, no. 16 (156607), p. 1-8.) that the projecting and recessed structure formed by microparticles (particle size of 10 nm to 300 nm) is provided above "a larger projecting and recessed structure" formed by larger particles (particles size: several µm to several ten µm) or bases such as fibers, networks, and hot-melts, so that liquid repellency is further improved. When forming "a larger projecting and recessed structure" on the surface of materials for containers and packaging, a sharp projecting and recessed structure cannot be provided by hot-melts, and convenient manners such as roll coating cannot be employed to fibers. Accordingly, "a larger projecting and recessed structure" is provided by applying particles together with a resin, that is a binder.

Binders are used for strengthening adhesion between the application target and the particles, and between the particles. However, it was problematic that: when the binder is used at a large amount, the projecting and recessed structure becomes smooth and thus liquid repellency deteriorates; and when the binder is used at a small amount, adhesion becomes weaker and thus the particles easily fall off.

To such problems, Patent Literature 3 (Japanese Patent No. 4878650B) introduces a method for forming a liquid-repellent film without using a binder. Specifically, it is described that a heat sealable resin (polyolefin) in particulate form such as beads (average particle size: 10 µm) and a silica microparticle (average particle size: 16 nm) are mixed in a solvent to prepare a coating agent, and this coating agent is applied to a substrate, heated and maintained at 160 to 180 °C for 20 seconds, and then dried to form a liquid-repellent film.

It is also described in Patent Literature 3 that the resin is heated for a short time at a temperature above the melting point of the resin, so that the surface of the particulate resin partially melts and bonds to each other to form a continuous resin film, and the silica microparticles disperse and attach to the surface of the resin particle in the resin film.

According to Patent Literature 3, it is described that "a larger projecting and recessed structure" is formed by the particulate resin and the surface of the particles of the resin partially melts in the heating and drying step, so that adhesion between the resins and between the resin and the substrate improves, and thus the binder becomes unnecessary.

### Citation List

### Patent Literature

Patent Literature 1: Japanese Unexamined Patent Publication No. 2009-241943A
Patent Literature 2: Japanese Patent No. 4348401B
Patent Literature 3: Japanese Patent No. 4878650B

### Non-Patent Literature

Non-Patent Literature 1: "Ultra-water-repellent surface: fabrication of complicated structure of SiO2 nanoparticles by electrostatic self-assembled films", Applied Surface Science, September 11, 2004, vol. 237, p. 543-547.
Non-Patent Literature 2: "Super-hydrophobic surfaces of layer-by-layer structured film-coated electrospun nanofibrous membranes", Nanotechnology, March 23, 2007, vol. 18, no. 16 (165607), p. 1-8.

### Summary of Invention

### Technical Problem

In order to increase efficiency of processing materials for containers and packaging into container shapes, and sealing them after putting the contents, it is usually demanded to impart heat-sealing property to materials for containers and packaging. When the above-described liquid repellency is to be imparted to materials for containers and packaging, a film having both liquid repellency and heat-sealing property can be obtained if the liquid-repellent film itself has heat-sealing property.

In the liquid-repellent film that does not employ binders like Patent Literature 3, however, a heat sealable resin is employed and it is heated to a temperature above the melting point of the resin in the drying step after application, so that the surface of the particulate resin partially melts. When the resin that is once melted is cooled and solidified, its physical property changes in accordance with the condition of cooling and solidification, and thus it is extremely difficult to control it. The degree of crystallinity generally becomes smaller in rapid cooling, and becomes larger in slow cooling; however, it depends on conditions such as the depth from the surface. Accordingly, the technique of cooling and solidifying the resin that is once melted greatly affects heat-sealing property.

In Patent Literature 3, the coating agent in which the particulate resin and the silica microparticles are mixed in the solvent is used, and the coating agent is dried after application, so that the surface of the particle of the resin partially melts to form the resin layer. Accordingly, even the silica microparticles disperse and attach to the surface of each resin particle, the silica microparticles may be covered with the molten resin or may be buried therein after the cooling and the solidification. As described above, there was still room for improvement the liquid repellency in conventional liquid-repellent films that do not employ binders.

In conventional liquid-repellent films, there was still room for improvement in durability of whether a high liquid repellency can be maintained when a physical external force acts on its surface.

The object of the present invention is to provide a film that is excellent in liquid repellency and heat-sealing property, and has durability. The object of the present invention is to provide a coating agent that can form a film that is excellent in heat-sealing property and durability.

### Solution to Problem

In order to solve the above-described problems, the present inventors developed a liquid-repellent and heat sealable film using a slurry coating agent as follows. That is, a heat sealable resin is dissolved in a solvent, and then the solvent is insolubilized, so that the partial-molten particulate resin deposits and disperses to obtain a stable slurry coating agent. When this slurry coating agent was applied onto a substrate and dried at a heating temperature below the melting point of the resin, the resin bonded to each other while maintaining each particulate shape, and achieved a good bonding state between the resin and the substrate; therefore, a heat sealable anchor coat having a relatively large projecting and recessed structure was obtained. By forming a topcoat consisting of oxide microparticles on the heat sealable anchor coat, a film that is excellent in liquid repellency, heat-sealing property and durability was obtained, and thus the present invention was accomplished.

That is, the liquid-repellent heat sealable film of the present invention comprises:
a resin layer applied and formed on at least one surface of a substrate; and
a large number of oxide microparticles adhered to the surface of the resin layer, wherein,
in the resin layer, a plurality of heat sealable particulate resins bonds to each other, while maintaining their particulate forms, and also bonds to the surface of the substrate to form a projecting and recessed structure, and
the oxide microparticles are adhered to the surface of the particulate resin in an exposed state without being buried.

According to the configuration of the present invention, the film has the resin layer consisting of the projecting and recessed structure, and a large number of oxide microparticles adhered to the surface thereof. Accordingly, the film has a complicated projecting and recessed structure in size from small to large configured of the projecting and recessed structure of the resin layer and the relatively small projecting and recessed structure formed by the oxide microparticles to exhibit an excellent liquid repellency. The resin layer of the substrate surface is formed by a plurality of heat sealable particulate resins, and the oxide microparticles are adhered to the surface of the particulate resin in an exposed state without being buried. Accordingly, the film that is excellent in heat-sealing property and liquid repellency can be obtained. The particulate resins are strongly bonded to each other and also strongly bonded to the substrate surface, so that the oxide microparticles adhered to the resin layer and the surface thereof hardly fall off, and thus the liquid-repellent film that is excellent in durability can be obtained.

The particulate resins are preferably piled up on the substrate while maintaining the particulate form to form a solidified product, which are, in the stage of a coating agent, particulate deposits from a solvent in which heat sealable resins are dissolved, and are dispersed in the solvent.

The particulate resin configured as above is solidified in a state such that a polymer chain of its surface is tangled up with a polymer chain of the surface of the adjacent particulate resin; therefore, the liquid-repellent heat sealable film that is excellent in adhesion with the adjacent particulate resin, excellent in adhesion with the oxide microparticles adhering to the surface, and excellent in adhesion with the substrate surface can be obtained.

The particulate resin is preferably a modified polyolefin resin. The oxide microparticles preferably include two or more types of inorganic oxide microparticles of different sizes. These oxide microparticles are preferably hydrophobic silica microparticles. The film preferably comprises a projecting and recessed structure of the resin layer and a minute projecting and recessed structure formed by the oxide microparticles having a smaller particle size than the particulate resin. The substrate is preferably a material for containers and packaging.

A coating agent according to the present invention is for applying a resin layer having a heat sealable projecting and recessed structure. The coating agent comprises:
a solvent; and
particulate resins having heat-sealing property,
wherein, the particulate resins are particulate deposits caused by insolubilizing the solvent in which heat sealable resins are once dissolved, and are dispersed in the solvent.

Here, insolubilization of the solvent is to promote re-precipitation by cooling, and is performed by cooling the solvent or adding a poor solvent (cold good solvent), for example. The particulate resin deposited in the solvent has a partial-molten interface, and configures a slurry coating agent having a dispersion stability.

According to this configuration, the coating agent comprises the resin that is once dissolved in the solvent, and deposited in a particulate form by insolubilization of the solvent, and the particulate resin is dispersed in the solvent in a partial-molten state; therefore, when it is applied to the substrate surface and heated and dried at a temperature below the melting point of the resin, the particulate resin becomes piled up and solidified while maintaining the particulate form, and thus a projecting and recessed structured resin layer having heal sealing property can be obtained. In addition, since the polymer chain on the surface of the particulate resin is tangled with the polymer chain of the adjacent particulate resin and solidified in such state, the heat sealable film that is excellent in adhesion with the adjacent particulate resin and also excellent in adhesion with the substrate surface can be achieved.

### Advantageous Effects of Invention

According to the configuration of the liquid-repellent heat sealable film of the present invention, a film that is excellent in liquid repellency and heat-sealing property, and has durability can be obtained. According to the configuration of the liquid-repellent heat sealable film of the present invention, a film that is excellent in heat-sealing property and has durability can be obtained.

### Brief Description of Drawings

FIG. 1 is a vertical cross-sectional view showing a schematic configuration of a liquid-repellent heat sealable film according to one embodiment.
FIG. 2 depicts a method for forming an anchor coat layer of the film of the present embodiment.
FIG. 3 is a graph showing a relationship between the application amount of the anchor coat and the surface roughness Ra.
FIG. 4 is a photograph of particle component distribution of the anchor coat formed on the substrate.
FIG. 5 schematically shows the evaluation criteria of the test examples and comparative examples.
FIG. 6 schematically shows an evaluation result of the test examples.
FIG. 7 schematically shows an evaluation result of the comparative examples.

### Description of Embodiments

In the following, a liquid-repellent heat sealable film according to one embodiment of the present invention is described with reference to the drawings.

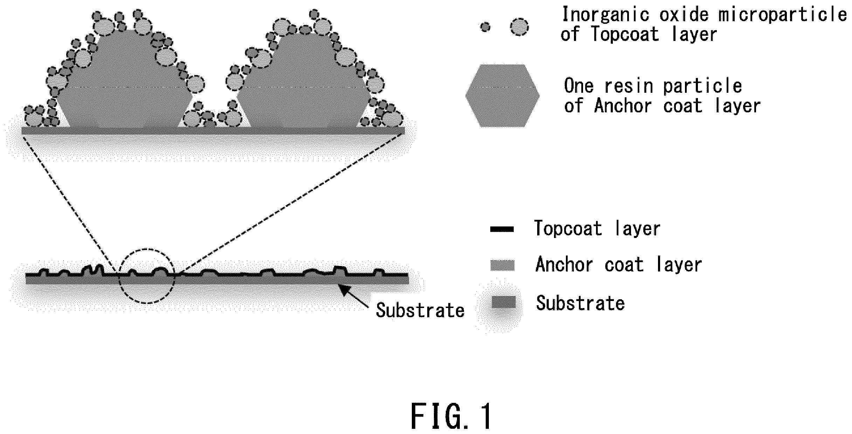

FIG. 1 is an enlarged cross-sectional view that schematically shows the liquid-repellent heat sealable film. A coating agent comprising a particulate resin is applied to one surface of a substrate, and dried with heating, so that a resin layer having a large projecting and recessed structure is formed as an anchor coat layer. A coating agent comprising an inorganic oxide microparticle is applied to the anchor coat layer, and dried with heating, so that a liquid-repellent layer having a small projecting and recessed structure is formed as a topcoat layer.

In the present invention, it is sufficient if the substrate is a material for containers and packaging that needs liquid repellency, and its form is not particularly limited. A film is used as the substrate in the present embodiment; however, it may be of any forms other than films such as sheets, cups, trays, or bottles. Various plastics, glasses, papers, ceramics or metals can be used as the substrate. Since the substrate needs to be sealed with heat-sealing after a content is put into the material for containers and packaging, a heat sealable material may be used as the substrate. Specifically, known seat-sealable materials such as polyethylene or polypropylene can be used, and lacquer-type adhesives, easy-peel adhesives, or hot-melt adhesives can be applied to the substrate in advance.

### <Anchor coat layer>

The anchor coat layer is prepared by applying and drying the coating agent in which the resin is dispersed in the solvent in a particulate form. As one example of the anchor coat layer, FIG. 1 shows a state such that three particulate resins are bonded to each other, and also bonded to the substrate. A heat sealable resin is preferred as the resin. Specifically, polyolefins are preferred, and modified polyolefins are more preferred.

Modified polyolefins that are modified by adding functional groups to polyethylene or polypropylene can be used. Polyolefins and functional groups are not particularly limited. By using a polyolefin of the same kind as the substrate, adhesion between the substrate and the anchor coat layer can be enhanced. Force of polyolefin particles adhering to each other is usually extremely weak even when they come into contact with each other; however, by adding a functional group thereto, force of adhering polyolefin particles can be strengthened by an action between the functional groups. For example, maleic acid is used as the functional group. Polyolefin is modified with maleic acid in order to enhance solubility by affinity with solvents, and adhesion to polar surfaces.

The modified polyolefin resin is a particulate resin having a particle size of 1 to 100 µm, preferably 2 to 50 µm, and more preferably 5 to 30 µm. When the particle size of the modified polyolefin resin is less than 1 µm, it becomes difficult to form a large projecting and recessed structure. It is possible to make the modified polyolefin resin to aggregate to a particle having a particle size larger than 100 µm; however, when the particle size of the particle is larger than 100 µm, it cannot be used in gravure applications. The particle size is preferably 50 µm or less (realistically 20 µm or less) so that it will not be scraped off with doctor blades.

When securing liquid repellency with such large projecting and recessed structure and small projecting and recessed structure, resins such as acryl and polyethylene waxes, and bead-shaped solid substances formed by inorganic matters such as silica are usually used to form the large projecting and recessed structure; however, in such manner, binders become necessary to bind them. As described earlier, when binders are used at a large amount, the projecting and recessed structure becomes smooth and thus liquid repellency deteriorates, and when binders are used at a small amount, adhesion becomes weaker and thus problems such as falling off of the particles may occur. The characteristic feature of the present invention is that binders are not used. Although problems as mentioned above do not occur by non-use of binders, adhesion between the particles becomes weaker.

As a method of not using binders, the bead-shaped solid substance may be changed to a heat sealable resin; however, in this method, it is required to heat the resin at a temperature above the melting point thereof when the resin is applied and dried. Accordingly, the particles partially melt, so that adhesion between the substrate or the particles can be enhanced, and thus durability can be enhanced. However, since it is heated to a temperature above the melting point of the resin, the substrate needs to be one that can endure the high temperature, and thus selectivity of substrates becomes limited. In addition, productivity deteriorates and cost increases in terms of facility for high temperature and energy.

When the resin that is once melted is cooled and solidified, the physical property changes in accordance with the condition of cooling and solidification, so that its control is extremely difficult. In general, the degree of crystallinity becomes smaller in rapid cooling, and the degree of crystallinity becomes greater in slow cooling; however, it also depends on conditions such as depth from the surface. Accordingly, it can be said that the technique of cooling and solidifying the resin that is once melted greatly affects heat-sealing property.

When a coating agent in which the particulate resin and the silica microparticles are mixed in the solvent is used, the silica microparticles may be covered with the melted resin or buried therein, and thus there was still a room for improvement in liquid repellency. There was also a room for improvement in durability in conventional liquid-repellent films whether a high liquid repellency can be maintained when a physical external force acts on their surface.

Accordingly, the heat sealable resin was used in the present embodiment, and application and drying were performed at a low temperature below the melting point.

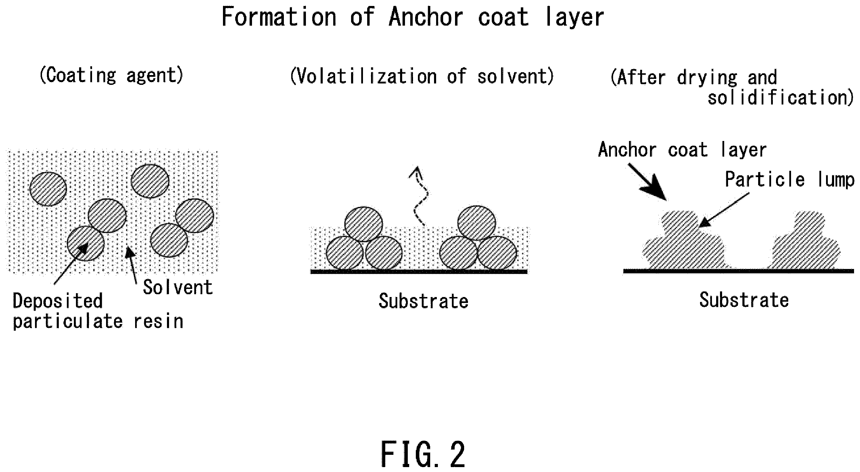

The content is described with reference to FIG. 2 that depicts procedures for forming the anchor coat layer.

First, a coating agent for the anchor coat is prepared as follows. The resin to be used is dissolved in a good solvent (e.g., high-temperature solvent) that dissolves the resin well to prepare a resin solution. Then, the good solvent is insolubilized. Insolubilization of the solvent is to promote deposition of the resin by cooling; for example, cooling the solvent, or adding a poor solvent (a cold good-solvent). Accordingly, the resin deposits in a particulate form. The resin deposited at this point has a particle size of several µm to several tens of µm and is minute. The state of the coating agent is schematically shown in the left side of FIG. 2. When the resin having the particle size of this size it dispersed in the solvent, a large number of particles usually gather and aggregate with each other, and thus the state of dispersion is not stable. In the method of the present embodiment, no aggregation is observed, and particles are dispersed one by one. The resin deposits in order to escape from the poor solvent, and becomes a particulate form, and the interface thereof is partial-molten. This state can be regarded as a swollen state of a solid substance of a kind when it is put into a specific liquid (e.g., like when a ball (portion) of udon, Japanese noodles, is put into water). By dissolving the soluble resin once and then deposited depositing by insolubilization of the solvent, a slurry coating agent having a minute particle size and dispersion stability can be prepared.

Next, the coating agent comprising the partial-molten minute resin particle is applied to the substrate. The state immediately after application is schematically shown at the center of FIG. 2. When it is dried at a temperature that is greatly lower than the melting pint of the resin, the resin surface is bound with the other resin surface while maintaining the particulate form, and the resin adheres to each other and to the substrate. The state when the particulate resin became a lump of particles after drying and solidification is schematically shown in the right side of FIG. 2.

As described above, compared to those that the resin is simply dispersed in the solvent in a solid state such as minute powders (e.g., the liquid-repellent film of Patent Literature 3), the coating agent comprising the particulate resin of the present embodiment has the following characteristic features.
(1) The minute resin particles are not aggregated, and a fine dispersion can be formed.
(2) The minute resin exists in the solution in a partial-molten state.

The effect thereof is that binders become unnecessary, and various types of substrates can be selected since drying after application is performed at a low temperature. Facility for high temperature is unnecessary, energy can be reduced at drying, and production rate can be increased; therefore, the liquid-repellent heat sealable film that can reduce cost can be obtained. The degree of crystallization of the dispersed resin does not increase easily at drying, and the film is formed while the degree of crystallization of the particle as of the state of the coating agent is maintained; therefore, heat-sealing property increases.

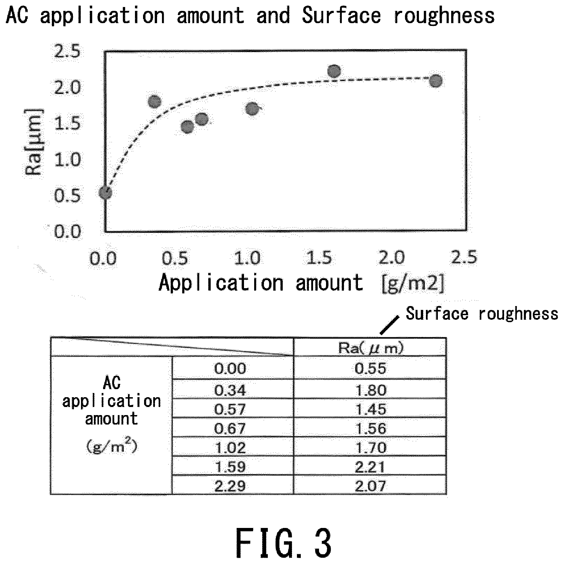

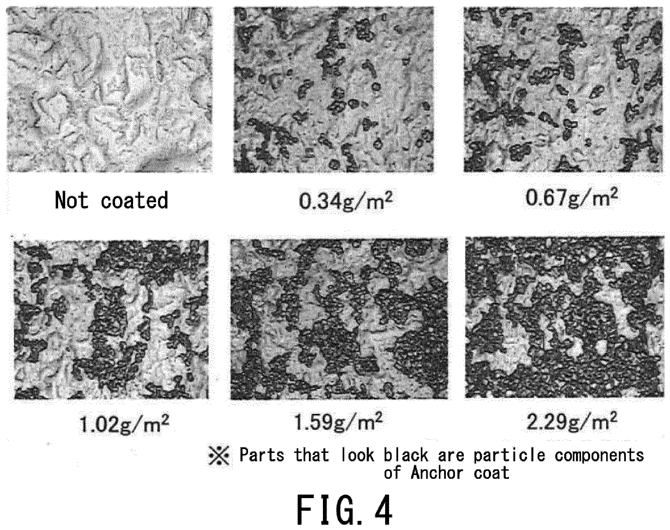

FIG. 3 shows a relationship between the application amount of the anchor coat (AC) and the surface roughness (Ra). The photographs in FIG. 4 show distribution of the particle components of the anchor coat taken for each AC application amount. From the graph of FIG. 3, Ra of the substrate alone was 0.55 µm, but Ra increased to 1.8 µm at the application amount of 0.34 g/m². According to the photograph of FIG. 4, the spaces between the particle components of the anchor coat are relatively large when the application amount is small; however, even in such distribution state, the surface roughness Ra is clearly different from the case of the substrate alone.

Looking at the correlation between the application amount and the surface roughness Ra in the application amounts ranging from 0.3 to 2.3 g/m², the surface roughness Ra increases as the application amount increases. Referring to the corresponding photographs of FIG. 4, in this range of application amounts, the spaces between the particle components of the anchor coat gradually become smaller as the application amount increases. Accordingly, it can be said that if the spaces (exposed parts of the substrate) are almost eliminated, the thickness of the application film merely increases when the application amount is increased, and the surface roughness Ra becomes substantially constant.

### <Topcoat layer>

After applying and drying the anchor coat layer, a liquid-repellent topcoat layer is prepared above the anchor coat layer. The topcoat layer comprises liquid-repellent microparticles, and the microparticles are preferably inorganic oxides. Silicon oxides such as silica (silicone dioxide), aluminum oxide, and titanium oxide may be used alone or in combination of two or more types, and hydrophobic silica microparticles are particularly preferred. By using two or more types of inorganic oxides of different sizes, a small projecting and recessed structure can be made into a structure of two or more layers, and, in that case, liquid repellency further improves. When two or more types of inorganic oxides of different sizes are used, it is more preferred to use the inorganic oxides of the same type since adhesion between the inorganic oxides improves.

When two types of hydrophobic silica microparticles are used, for example, the hydrophobic silica microparticles of nano-order and the hydrophobic microparticles of sub-micron- or micron-order are preferred as the particle size of the microparticles. The particle size of these inorganic oxides is preferably smaller than that of the resin used in the anchor coat layer.

The microparticles are dispersed in the solvent to prepare the topcoat coating agent, and the coating agent is applied on the anchor coat layer and dried thereby to prepare the topcoat layer. The solvent is not particularly limited; however, organic polar solvents are preferred. Fluoro-resins that are generally known as liquid-repellent substances may be mixed with the topcoat coating agent, or may be added to inorganic oxide microparticles. That is, one applied with an oil-repellent coat of fluoro-resin together with the hydrophilic silica particles can be used as the topcoat layer. The temperature at application and drying is below the melting point of the resin used in the anchor coat layer.

### <Laminated layer>

The methods for preparing the coating agents and for applying and drying of the topcoat and the anchor coat are not particularly limited, and all methods that are generally known can be used. The anchor coat layer is prepared as described above, and the topcoat layer is prepared above the anchor coat, so that when the surface to which the application matter is applied is heat-sealed, a sufficient heat-sealing property can be secured by the following reasons.

It is usual that even the substrate is a sealant resin, when a non-heat-sealable anchor coat layer is present, heat-sealing property deteriorates by being inhibited by the anchor coat layer upon heat-sealing. According to the present embodiment, however, since the heat sealable resin is used in the anchor coat layer, a sufficient heat-sealing intensity can be secured.

The thicknesses of the topcoat layer and the anchor coat layer are not particularly limited. When the topcoat layer is thick and the anchor coat layer is thin, a sufficient hat-sealing property may not be secured. When the topcoat layer is thin and the anchor coat layer is thick, a sufficient heat-sealing property can be secured, but liquid repellency may be poor. The balance between the thicknesses of the topcoat layer and the anchor coat layer is important.

### [Example 1]

A heat sealable polyethylene film was used as the substrate film. Specifically, PET (thickness: 12 µm), an aluminum foil (thickness: 7 µm), and a linear low-density polyethylene (LLDPE, thickness: 30 µm) were laminated to form a substrate, and a coating film was formed on an LLDPE surface of the substrate. As the anchor coat, a coating agent Eipoc resin B ("Eipoc" is a registered trademark of Sakuranomiya Chemical Co., Ltd.) comprising thermoplastic resin (polyolefin resin) particles manufactured by Sakuranomiya Chemical Co., Ltd. was used. As the coating agent for the topcoat, one in which the hydrophobic silica having an average particle size of 6.5 µm and the hydrophobic silica having an average particle size of 10 nm (manufactured by Nippon Aerosil Co., Ltd.) were dissolved and mixed in a solvent was used. The application amounts of Examples 1 to 3 are shown in Table 1. The application amounts are those that are measured when dried.

The coating agent (PP-Eipoc) used for the anchor coat is a suspension (slurry coating agent) in which particles of the thermoplastic resin are dispersed in a solvent. It is prepared by dissolving the thermoplastic resin in the solvent once, and cooling to deposit the thermoplastic resin as a particle.

The slurry coating agent is prepared by such method, so that the particle size of the particles can be controlled, and dispersion stability of the particles in the solvent, bond between the particles after application and drying, and bond between the particle and the substrate can be strengthened.

The slurry coating agent was applied with a bar coater at the application amounts of Table 1. Then, it was dried at 50°C that is below the melting point of the polyolefin resin (160°C) to form the anchor coat layer. By heating at a temperature below the melting point of the thermoplastic resin at the application and drying step, the forms of the particles can be maintained and the projecting and recessed structure of the anchor coat can be formed.

In addition, by heating at a temperature below the melting point of the thermoplastic resin of the anchor coat at the application and drying step of the topcoat, the projecting and recessed structure of the anchor coat can be maintained.

Comparative Examples 1 and 2 were prepared in the same manner as Examples except that the anchor coat agent and the topcoat agent were applied at the application amounts of Table 1.

Comparative Example 3 was prepared in the same manner as Examples except that the topcoat layer was not prepared.

Comparative Example 4 was prepared in the same manner as Examples except that the anchor coat layer was not prepared.

Comparative Example 5 was evaluated only for the substrate.

In the following, the evaluation methods are described.

### <Liquid repellency>

The contact angle meter CA-DT (manufactured by Kyowa Interface Science Co., Ltd.) was used to measure the contact angles of immediately after when 10 microliters (µL) of water droplet (pure water) was dropped onto the surface of the liquid-repellent layer or the film surface. The same contact angle meter was used to measure the contact angles of immediately after when 10 µL of a wetting tension test solution (60 dyn/cm: formamide 80 v/v%, water 20 v/v%) was dropped onto the surface of the liquid-repellent layer or the film surface.
Standard 1: the contact angle of pure water measured by the contact angle meter being 145 degrees or greater.
Standard 2: the contact angle of the wetting tension test solution measured by the contact angle meter being 145 degrees or greater.

When both standards 1 and 2 were satisfied, it was evaluated as "best (AA)". When only standard 1 was satisfied, it was evaluated as "good (A)". When both standards 1 and 2 were not satisfied, it was evaluated as "bad (B)".

### <Heat-sealing intensity>

Measurement was performed with the following method. When it was 6.0 N or greater, it was evaluated as "good (A)". When it was less than 6.0 N, it was evaluated as "bad (B)". The liquid-repellent heat sealable film surface of the substrate/liquid-repellent heat sealable film was heat-sealed to a paper cup sheet for yoghurts (the heat sealable surface: polyethylene (PE)) under the following conditions to prepare a sample and measure heat-sealing intensity.

Heat-sealing condition: temperature of 180°C, pressure of 3.4 kgf/cm², time of 2 seconds

Heat-sealing intensity test: the sample was cut into a size of 15 mm (width) x 100 mm (length) to measure a peeling intensity with a T peel tester (in accordance with JISZ0238).

T peel tester: AGS-X manufactured by SHIMADZU CORPORATION

### <Durability>

Measurement was performed with the following method. When the contact angle was 145 degrees or greater, it was evaluated as "good (A)". When the contact angle was less than 145 degrees, it was evaluated as "bad (B)". The tester wore a new nitril rubber glove, put a specimen onto a balance, and, while applying a load of 200 g to 300 g with a first finger or a middle finger, slid the specimen to measure the contact angle of pure water. The measurement method of the contact angle is the same as the evaluation method of liquid repellency. In particular, those having an excellent durability were evaluated as "best (AA)".

### <Total judgement>

Those that passed all items were evaluated as A (acceptable), and those that did not pass any one of the items were regarded as B (not acceptable). The samples that were evaluated as "bad (B)" in the evaluation for liquid repellency were not evaluated for durability (shown with "-" in Table 1).

**[Table 1]**

| Liquid-repellent heat sealable film | Application amount (g/m²) | | Liquid repellency | Heat-sealing intensity | Durability | Total judgement |
|---|---|---|---|---|---|---|
| | Anchor coat | Topcoat | | | | |
| Example 1 | 2.34 | 0.80 | AA | A | AA | AA |
| Example 2 | 1.65 | 0.69 | AA | A | A | A |
| Example 3 | 1.68 | 0.38 | AA | A | A | A |
| Comparative Example 1 | 0.57 | 0.60 | A | B | A | B |
| Comparative Example 2 | 1.29 | 0.17 | A | A | B | B |
| Comparative Example 3 | 1.59 | 0 | B | A | - | B |
| Comparative Example 4 | 0 | 0.60 | A | B | B | B |
| Comparative Example 5 | 0 | 0 | B | A | - | B |

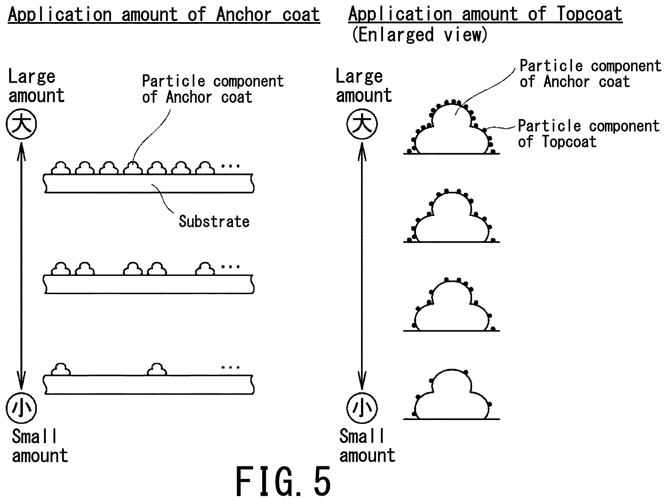

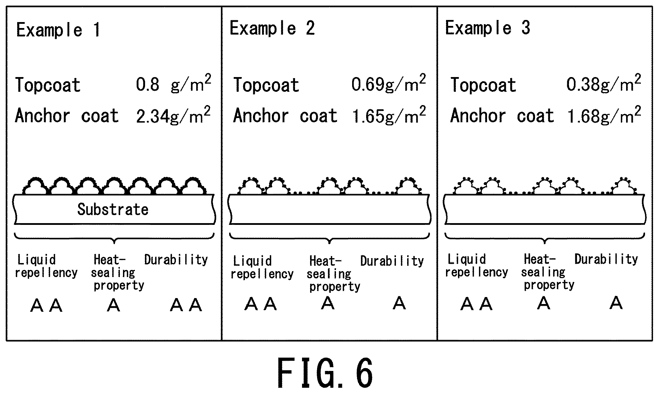

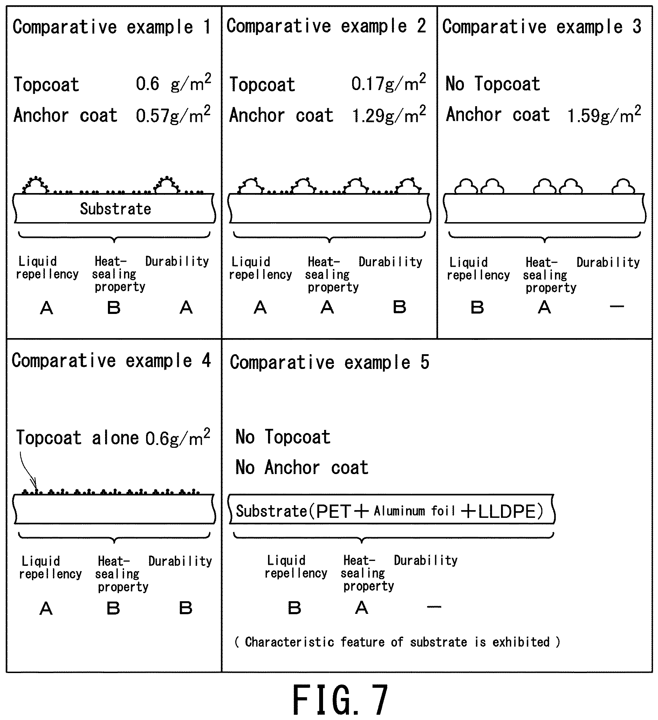

As shown in Table 1, Examples 1 to 3 achieved "good" in all of liquid repellency, heat-sealing intensity and durability (especially "best" for liquid repellency), and they were judged as acceptable. In Example 1, the application amount of the anchor coat was 2.34 g/m², and the application amount of the topcoat was 0.80 g/m², In Example 2, the application amount of the anchor coat was reduced to 1.65 g/m², but a good result was achieved similarly. In Example 3, the application amount of the topcoat was also reduced to 0.38 g/m², but a good result was achieved similarly. In particular, Example 1 achieved "best" in liquid repellency and durability, and resulted as "best (AA)" in the total judgement. (The results of the present examples are schematically shown in FIG. 5 to FIG. 7)

In Comparative Example 1, the application amount of the anchor coat was greatly reduced to 0.57 g/m², and heat-sealing property resulted to be poor. In Comparative Example 2, the application amount of the anchor coat was reduced to 1.29 g/m² and the application amount of the topcoat was reduced to 0.17 g/m², and durability resulted to be poor. Comparative Example 3 was evaluated for the anchor coat layer alone, and liquid repellency resulted to be poor.

Comparative Example 4 was evaluated for the topcoat layer alone (no anchor coat layer), and heat-sealing property and durability resulted to be poor. In the evaluation of the substrate alone to which no liquid-repellent heat sealable layer was formed, liquid repellency could not be achieved.

The above results show that, in order to achieve all of liquid repellency, heat-sealing property, and durability, both of the anchor coat layer and the topcoat layer are necessary.

When the application amount of the anchor coat layer is less than 1.29 g/m², it cannot be used due to the poor heat-sealing property even the application amount of the topcoat layer is larger. In addition to this condition, when the application amount of the topcoat layer is about 0.17 g/m² or greater, a good liquid repellency can be achieved. When the application amount of the topcoat layer is about 0.38 g/m² or greater, the best liquid repellency and a good durability may be achieved. When the application amount of the anchor coat layer is about 1.65 g/m² or greater in these conditions, the liquid-repellent heat sealable film that stably exhibits all of liquid repellency, heat-sealing property and durability can be obtained.

The anchor coat layer is about 3.0 g/m² at most and the topcoat layer is about 1.0 g/m² at most. The application amounts above the above-mentioned amounts are not particularly necessary since it will lead to increase in cost.

The coating agent for the anchor coat of the present embodiment may be used alone in the following applications. That is, the coating agent comprises the resin that is once dissolved in the solvent and then deposited in a particulate form by insolubilization of the solvent, and the particulate resin is dispersed in the solvent in a partial-molten state. Therefore, when it is applied to the substrate surface and heated and dried at a temperature below the melting point of the resin, the particulate resin, while maintaining its particulate form, becomes piled up and solidified, and thus the projecting and recessed structured resin layer having heat-sealing property can be obtained. In addition, it becomes a heat sealable resin film having an excellent adhesion with the adjacent particulate resin, and also an excellent adhesion with the substrate surface. For example, a minute projecting and recessed structured resin film may be further provided with an oil film, so that it may be used as a liquid-sliding film.

## Claims

1. A liquid-repellent heat sealable film comprising:
a resin layer applied and formed on at least one surface of a substrate; and
a large number of oxide microparticles adhered to the surface of the resin layer, wherein,
in the resin layer, a plurality of heat sealable particulate resins bonds to each other, while maintaining their particulate forms, and also bonds to the surface of the substrate to form a projecting and recessed structure, and
the oxide microparticles are adhered to the surface of the particulate resins in an exposed state without being buried.

2. The liquid-repellent heat sealable film of claim 1,
wherein the particulate resins are piled up on the substrate while maintaining the particulate form to form a solidified product,
which are, in the stage of a coating agent, particulate deposits from a solvent in which heat sealable resins are dissolved, and are dispersed in the solvent.

3. The liquid-repellent heat sealable film of claim 1 or 2, wherein the resin is a modified polyolefin resin.

4. The liquid-repellent heat sealable film of any one of claims 1 to 3, wherein the oxide microparticles include two or more types of inorganic oxide microparticles of different sizes.

5. The liquid-repellent heat sealable film of any one of claims 1 to 4, wherein the oxide microparticle is a hydrophobic silica microparticle.

6. The liquid-repellent heat sealable film of any one of claims 1 to 5, wherein the film comprises the projecting and recessed structure of the resin layer and a minute projecting and recessed structure formed by the oxide microparticles having a smaller particle size than the particulate resin.

7. The liquid-repellent heat sealable film of any one of claims 1 to 6, wherein the substrate is a material for containers and packaging.

8. A coating agent for applying a resin layer having a heat sealable projecting and recessed structure comprising:
a solvent; and
particulate resins having heat-sealing property,
wherein, the particulate resins are particulate deposits caused by insolubilizing the solvent in which heat sealable resins are once dissolved, and are dispersed in the solvent.
